# EUROPEAN PATENT APPLICATION

(11) **EP 1 734 379 A1**
(43) Date of publication of application: **20.12.2006**
(21) Application number: 05728837.5
(22) Date of filing: 04.04.2005
(51) Int. Cl.: G01S 5/14

(54) **POSITION GUARANTEE SERVER, POSITION GUARANTEE SYSTEM, AND POSITION GUARANTEE METHOD**

(30) Priority: 08.04.2004 JP 2004114639
(71) Applicant: MITSUBISHI DENKI KABUSHIKI KAISHA, Chiyoda-ku, Tokyo 100-8310 (JP)
(72) Inventor: SAITO, Kenichi c/o Mitsubishi Electric Corporation, Tokyo 1008310 (JP)
(74) Representative: Pfenning, Meinig & Partner GbR
(86) International application number: PCT/JP2005/006588
(87) International publication number: WO 2005/098468

(57) **Abstract**

To obtain highly reliable position guarantee that makes it difficult for data to be tampered with and allows a prompt response. A position guarantee server includes: a communication section that receives from a positioning terminal transmission data including encoded data of a positioning code and a carrier wave from a positioning satellite by using the identification code of the positioning terminal itself; a decoding section (23) that stores the identification code of the positioning terminal and decodes the transmission data by using the identification code; a position computing section (24) that computes the position of the positioning terminal based on the positioning code decoded and the carrier wave decoded by the decoding section; and a certificate generating section (22) that certifies position information that is obtained by the position computing section. The certificate generating section certifies the position information by the position computing section upon receipt of a position guarantee request from the positioning terminal.

## Description

### Technical Field

The present invention relates to a system and equipment for position certification that uses positioning satellite information or the like.

### Background Art

A system to specify the position of a mobile object, such as a mobile terminal, and guarantee the position has already existed. A conventional position guarantee system described in Patent Document 1 uses a Global Positioning System (GPS) that uses information from three or more positioning satellites to certify acquired position information and time information. With reference to the configuration, a positioning terminal (a digital camera) encodes longitude/latitude information that is generated based on a GPS radio wave received at a GPS receiver, and transmits it to a server as position information. The server decodes the position information, generates location specifying data based on the longitude/latitude information obtained, processes it by copy-guarding, and transmits it to the positioning terminal. By doing this, it is certified that the photographing was made nowhere else but at that particular place.
This system, configured to have a function to compute position by the GPS receiver as a mobile terminal, however, has the same problem as those posed by other conventional GPS receivers.

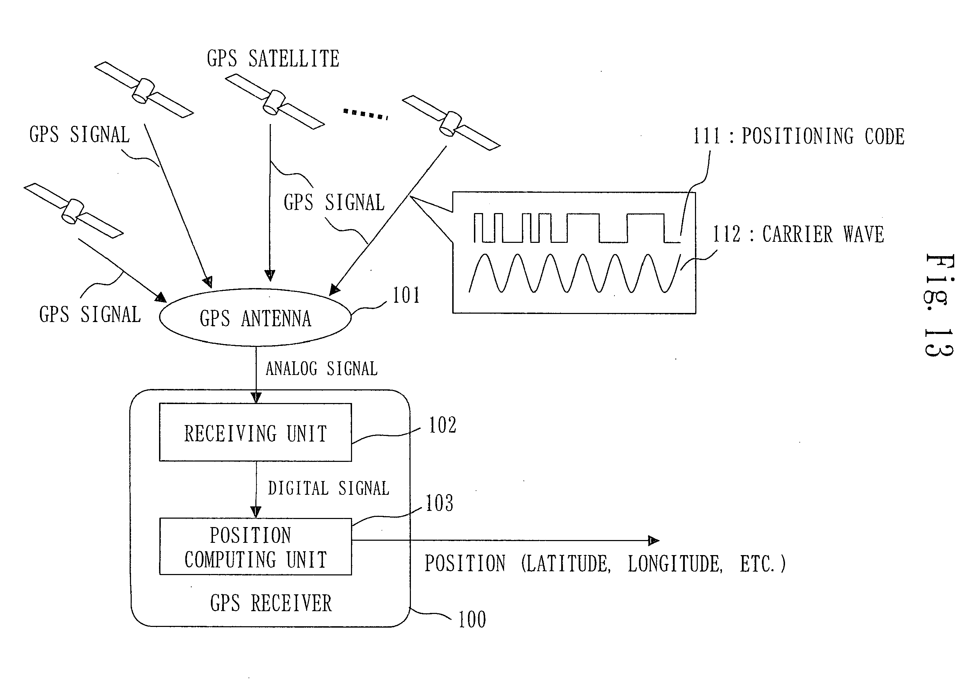

A commonly used GPS receiver 100, as shown in Fig. 13, is configured to include a GPS antenna 101 that receives a radio wave from a GPS satellite, a receiving unit 102 that converts an analog signal received at the GPS antenna 101 into a digital signal, and a position computing unit 103 that computes a position by using a positioning code 111 and a carrier wave 112 that are extracted from the digital signal, or the like. The GPS receiver 100 then generates a position (a longitude, a latitude, etc.) by using the radio wave received from two or more GPS satellites.
This GPS receiver 100 has cold start (initial positioning when power is supplied) for positioning that takes several tens of seconds, for example. The problem is that certification cannot be acquired for a request from a user during that period until the receiver becomes ready for position computation.
As a matter of course, no certification can be acquired where GPS signals do not reach for unavailability of positioning,
Furthermore, the GPS receiver may receive a false GPS antenna output by equipment that can generate an output as powerful as the output of the GPS antenna, such as a GPS simulator, for example. A false position may also be inputted directly to an information processing device.

The GPS positioning method that is made available for private sector is roughly categorized into a method using a positioning code (a C/A code) and a method using the phase of a carrier wave. The positioning code, however, is known to be easily counterfeited. For example, by installing equipment that can generate the same signal as that of a GPS satellite, such as PseudoLite, near a GPS antenna, a false GPS signal may be inputted to the GPS antenna.
In any case, a position different from where a positioning terminal actually was may be notified to a center system (a server). However, the server not capable of detecting that event would grant certification to a false position when notified.
Patent Document 1: Unexamined Patent Publication No. 2001-33537

### Disclosure of the Invention

### Problems to be Solved by the Invention

The conventional position guarantee systems thus configured have a problem that it may take time to provide position guarantee, or even position guarantee cannot be performed.
Another problem is that the conventional systems, configured to compute a position or a longitude and latitude by a digital camera or a positioning terminal, allows the intrusion of false information easily.
Still another problem is that the server would grant certification even to a false position by false position information that was transmitted from a terminal intentionally.
It is known that GPS based positioning in general may include an error of several meters to several tens of meters. The accuracy of a position that is certified based on a commonly used GPS system may not therefore always be guaranteed.

The present invention is directed to solving the above discussed problems, and an object thereof is to provide position guarantee with a shorter duration of cold start. Another object is to achieve position guarantee even where GPS signals do not reach.
Still another object of the present invention is to provide highly reliable position guarantee by detecting and preventing the intrusion of false information.
Still another object of the present invention is to provide position guarantee together with position accuracy disclosed.

### Means to Solve the Problems

A server according to this invention may include:
a communication section that may receive from a positioning terminal transmission data including encoded data of a positioning code and a carrier wave from a positioning satellite by using an identification code of the positioning terminal itself;
a decoding section that may store the identification code of the positioning terminal and decode the transmission data by using the identification code;
a position computing section that may compute a position of the positioning terminal based on the positioning code decoded and the carrier wave decoded by the decoding section; and
a certificate generating section that may certify position information that is obtained by the position computing section.
Then, the certificate generating section, upon receipt of a position guarantee request made from the positioning terminal, may certify the position information by the position computing section.

The certificate generating section may certify the position information together with one of information about a device indicating position and information indicating time.

The certificate generating section may certify the position information together with one of computation based on correction information about position information from the positioning satellite and distribution information of the positioning satellite.

The server may further include a receiving section that may receive a position signal indicating a position of the positioning satellite, and a signal accumulating section that may store the position signal received by the receiving section. Then, the position computing section may judge the transmission data of the positioning terminal by using the position signal stored, and compute a position of the positioning terminal when determining the authenticity of the transmission data from the positioning terminal.

A position guarantee system according to this invention may include a positioning terminal that may encode a positioning code and a carrier wave from a positioning satellite by using the identification code of the positioning terminal itself, and transmit them as transmission data; and a server. The server may include a decoding section that may store the identification code of the positioning terminal, receive and decode the transmission data; a position computing section that may compute a position of the positioning terminal based on the positioning code decoded and the carrier wave decoded; and a certificate generating section that may certify position information that is obtained by the position computation. Then, the server, upon receipt of a position guarantee request from the terminal, may certify the position information by using the position computation.

The positioning terminal may secure against tampering a portion that may receive the positioning code and the carrier wave from the positioning satellite and a portion that may encode the signal received by using the identification code of the positioning terminal itself.

The server may further include a receiving section that may receive a position signal indicating a position of the positioning satellite; and a signal accumulating section that may store the position signal received by the receiving section. Then, the position computing section may judge the transmission data of the positioning terminal by using the position signal stored, and compute a position of the positioning terminal on determining the authenticity of the transmission data from the positioning terminal.

A position guarantee method according to this invention may include the steps of:
a positioning terminal:
   encoding a positioning code and a carrier wave from a positioning satellite by using an identification code of the positioning terminal, and transmitting them as transmission data;
   a server:
      receiving the transmission data and decoding the transmission data by using the identification code of the positioning terminal itself;
      computing a position of the positioning terminal based on the positioning code decoded and the carrier wave decoded as a position computing step; and
      certifying position information obtained by the position computing step in response to a position guarantee request as a certificate generating step.

The position computing step may include computing the position together with position information from another device and adding to the position information of the positioning terminal at least one of the position information and time information computed.

The position guarantee method may further include the step of removing an unwanted signal from the transmission data received as a signal removing step. Then, the position computing step may include computing the position of the positioning terminal by using the transmission data decoded that has been processed through the signal removing step.

The position computing step may include acquiring at least one of correction information for the position information from the positioning satellite, the position information of the positioning satellite, and position information of an electronic reference point; determining the authenticity of the transmission data from the positioning terminal based on acquired information; and computing the position of the positioning terminal on determining the authenticity of the transmission data from the positioning terminal.

The position guarantee method may further include the steps of:
the server:
   receiving a position signal indicating a position of the positioning satellite as a receiving step, and
   storing the position signal received by the receiving step by the server as a signal accumulating step.
Then, the position computing step may include determining the authenticity of the transmission data from the positioning terminal by using the position signal stored by the signal accumulating step, and computing the position of the positioning terminal on determining the authenticity of the transmission data from the positioning terminal.

### Effect of the Invention

Including a server that decodes an input including an encoded positioning code and an encoded carrier wave and computes the position, this invention is effective in providing anti-tampering and highly reliable position guarantee with real-time response.

### Best Mode for Carrying out the Invention

### Embodiment 1.

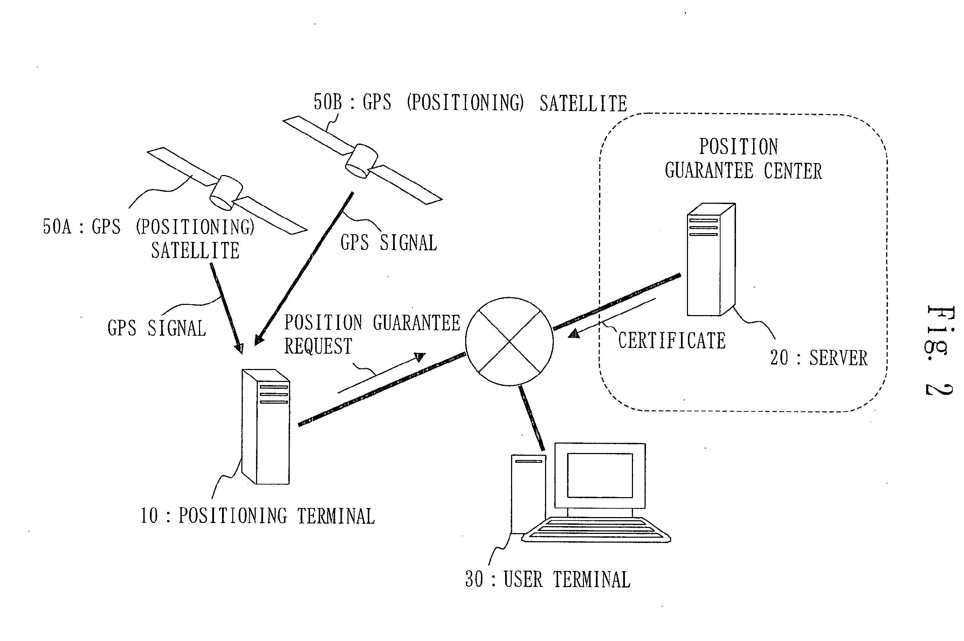

A description is given of a position guarantee apparatus and a position guarantee system that provide immediate guarantee in response to a request for position guarantee and that provide high quality guarantee of accuracy.
Examples of a position guarantee service providing system shown in Fig. 2 may include a road pricing system to certify that a car was in a charging area, and an information security system to certify that a person was in an area where confidential documents can be read and viewed. This type of position guarantee system is configured to include a positioning terminal 10, a position guarantee server 20, and a user terminal 30, which are connected via a communication network such as a wireless communication network or a wired communication network such as the Internet. The positioning terminal 10 receives a GPS signal and makes a request for position guarantee of someone having existed at particular time and at a particular position, or makes a request for guarantee of information on the position for accuracy. The position guarantee server 20 (hereinafter referred to as a server) receives the request and issues a certificate to guarantee them. The user terminal 30 uses the certificate issued. Alternatively, it is also possible that the user terminal 30 and the positioning terminal 10 are included in a single terminal. Possible examples of the positioning terminal 10 are a special-purpose terminal and a mobile terminal such as a mobile phone, a PDA, or a car navigation system. The positioning terminal 10 may be carried by walking people with mobile terminals or installed on a motor vehicle, a motorcycle, or the like.
The server may be installed at a position guarantee center, or the like.

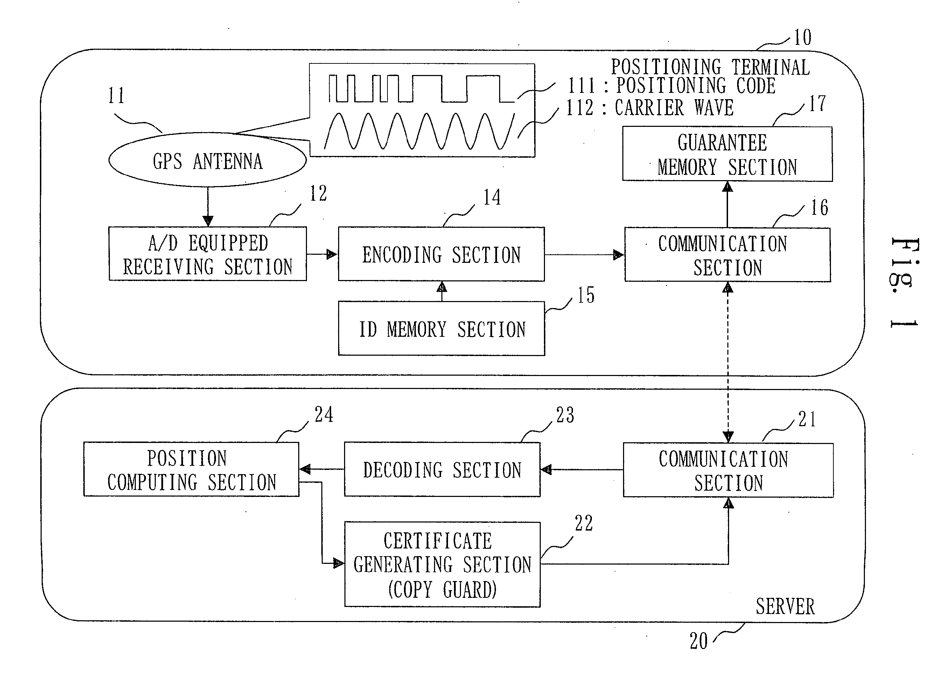

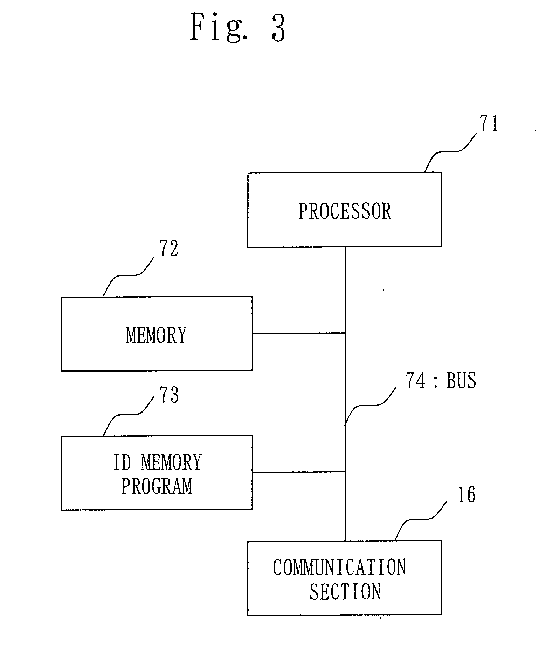

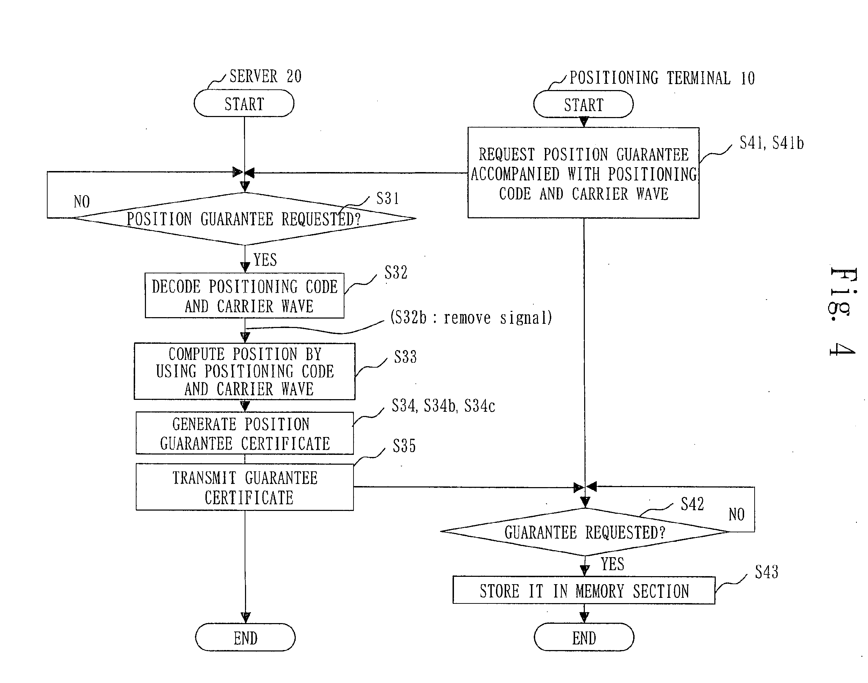

Fig. 1 shows a hardware configuration of a system according to this embodiment.
First, the positioning terminal 10 is configured to include the following elements. Specifically, the positioning terminal 10 includes a GPS antenna 11, an A/D equipped receiving section 12, an ID memory section 15, an encoding section 14, a communication section 16, and a guarantee memory section 17. The GPS antenna 11 receives a positioning code 111 and a carrier wave 112 included in a GPS signal. The A/D equipped receiving section 12 converts A/D converted signals of the signal and the carrier wave received at the GPS antenna 11 to transmission data. The ID memory section 15 stores an identification code (ID) unique to each positioning terminal. The encoding section 14 encodes the transmission data by using the ID. The communication section 16 transmits encoded transmission data to a server. The guarantee memory section 17 stores position guarantee transmitted from the server.
More specifically, the ID memory section 15, as shown in Fig. 3, is configured to include a processor 71, a memory 72, and a program (an ID memory program 73 in this specific case) stored in the memory 72, for example. The processor 71 and the memory 72 are connected via an internal bus 74. Likewise, the encoding section 14 and the guarantee memory section 17 are also programs stored in a memory and executed by a processor 31 reading the contents thereof. These elements are connected via the internal bus 74. As for an overall operation, the processor has functions shown in Fig. 4 by a control program that is not shown in the figure.
Elements of the server 20 discussed below are configured, like the configuration shown in Fig. 3, to have execution programs that perform functions shown by corresponding elements of Fig. 1, so that they also have the functions shown in Fig. 4.
The server 20 is configured to include a communication section 21, a decoding section 23, a position computing section 24, and a certificate generating section 22. The communication section 21 receives encoded transmission data, and transmits position guarantee. The decoding section 23 decodes the encoded transmission data. The position computing section 24 computes a position based on decoded transmission data. The certificate generating section 22 generates a certificate (position guarantee) corresponding to a computed position. The position guarantee may be copy-guarded as appropriate, so that illegal copies are not allowed at a receiving side.

The following shows an operation flow of the whole system based on the system diagram of Fig. 2 and the operation flow of Fig. 4.
(1) The positioning terminal 10 receives the positioning codes 111 and the carrier waves 112 grouped together in pairs at the GPS antenna 11. The A/D equipped receiving section 12 converts those into digital signals. The digital signals include positioning codes 111 and the carrier waves 112 in pairs received from two or more positioning satellites together with the identification codes of corresponding positioning satellites 50a, 50b. The encoding section 14 encodes the positioning code 111, the carrier wave 112, and a positioning satellite identification number by using its own ID. To this encoding, any conventionally known method may be applied. Then, in a step S41, an encoded output is transmitted to the server 20 as transmission data together with a position guarantee request.
(2) In the server 20 on receiving the position guarantee request via the communication section 21 in a step S31, the decoding section 23 decodes a transmitted signal in S32. To this decoding, any conventionally known method may be applied. In S33, the position computing section 24 computes the position and the time of a positioning terminal 10, the transmission source, based on the positioning code 111 decoded, the carrier wave 112 decoded, and the positioning satellite identification number decoded. They are then transferred to the certificate generating section 22 together with the ID of the positioning terminal 10. To this position computation calculation, any conventionally known method may be applied.
(3) In the server 20, in S34, the certificate generating section 22 generates a certificate for the position and time based on the received signal corresponding to the ID unique to the terminal. This certificate is processed through copy-card operation to be secured against tampering. To the generating method thereof, any conventionally known method may be applied. When the process of S34 is over, this generated certificate of position guarantee is transmitted to a user terminal in a subsequent step 35.

For the position computation, it needs to know where a GPS satellite was at that particular time. The method to know the position of a satellite by the positioning terminal 10 includes a so-called network assisted method to acquire the position from a server, other than the method of extracting it from a GPS signal. Each method, however, requires a substantial amount of time at cold start before computation takes place.
Compared to this disadvantageous fact, the above described configuration is effective in shortening the period of cold start because position computation is done by the server 20. It is also effective in securing position information against tampering because the positioning code and the carrier wave are encoded for transmission.

### Embodiment 2.

A description is now given of a system that is designed to further secure position information against tampering.

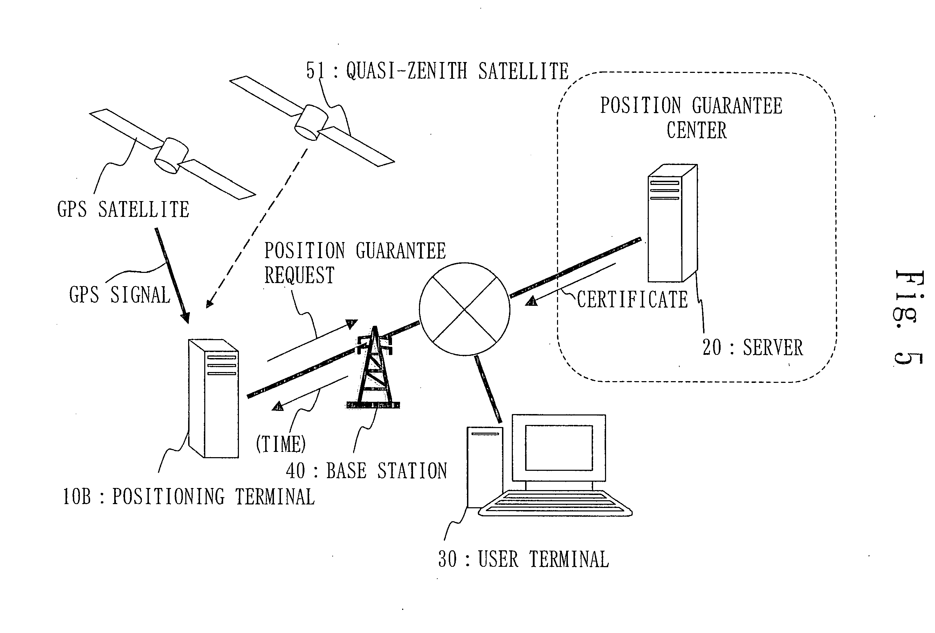

Fig. 5 shows a system configuration according to this embodiment. The hardware configuration is the same as that of Fig. 1 except for the server 20. The server receives position and time information not only from the GPS signal from a positioning terminal 10b but also from a base station 40 via which the positioning terminal 10b is connected to a communication network.

An operation of the thus configured system is almost the same as that of the first embodiment except for the following portions.
In a step S34b of Fig. 4, on receiving the position guarantee request from a terminal and also receiving a GPS signal and a position on a communication network, the server 20 computes the position and time of the communication network based on the position information received, assuming that the received position on the communication network indicates the base station 40 that is currently accessed by a corresponding mobile phone, for example, for communication.
The server 20 outputs a position guarantee together with the network position in reply to the position guarantee request from the terminal.

Position on the communication network, that is the base station 40 in this specific case, is untamperable by the terminal. Therefore, more reliable position guarantee may be achieved by using the record of the position of the base station 40 on the network for position computation by the server 20. Also, it is effective in preventing tampering.
The use of position on a communication network for position computation is effective in providing position guarantee where less than a required number of GPS signals for computation are received.

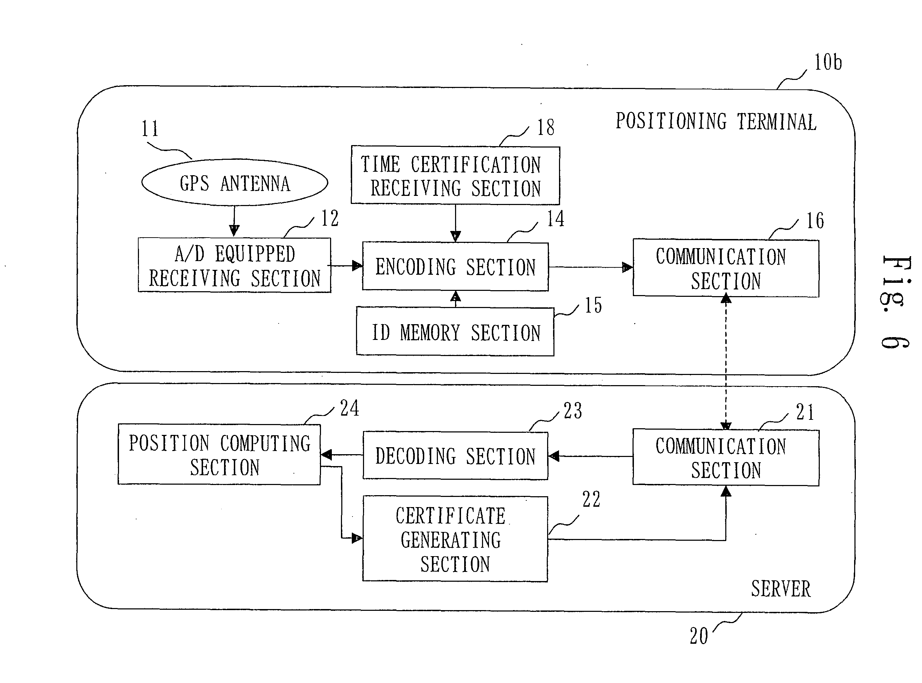

Another system configuration of this embodiment is now explained with reference to Fig. 5.
Referring to the figure, the positioning terminal 10b acquires time distributed from a quasi-zenith satellite 51, the mobile phone base station 40, or the like through wireless communication, broadcasting, etc. The positioning terminal 10b is equipped with a time certification receiving section 18 shown in Fig. 6 that receives the time.

An operation of the system shown in Fig. 5 and Fig. 6 is different from those of the embodiments described hereinbefore in the following aspects:
(11) the positioning terminal 10b transmits to the server the GPS signal received in S41b, time information from the quasi-zenith satellite or the mobile phone base station 40 received at the time certification receiving section, and the position guarantee request.
(12) The server 20, upon receipt of the position guarantee request from the terminal in S31, decodes a transmitted signal, computes the position and the time thereof based on the GPS signal, and compares them with the time of received time information. Thus, the server verifies the authenticity of the time.

Thus, the spoofing of a position may be detected by re-transmitting a GPS signal once received at a different antenna after some time has passed, for example. Therefore, this configuration may achieve more reliable position guarantee.

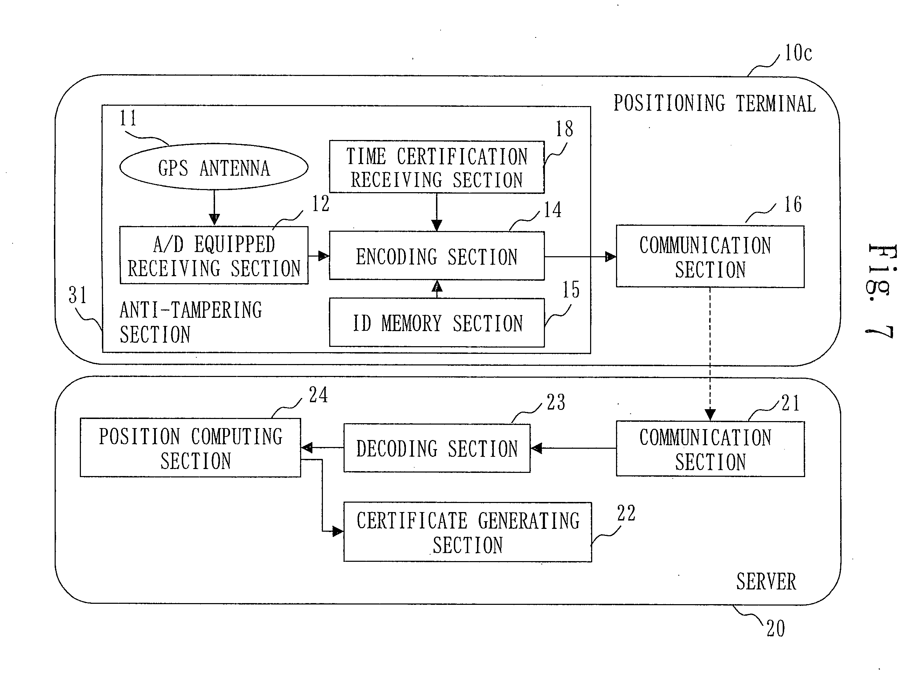

Another hardware configuration is now explained with reference to Fig.7.
Referring to the figure, a positioning terminal 10c is provided with an anti-tampering section 31. More specifically, the GPS antenna 11, the A/D equipped receiving section 12, the encoding section 14, the ID memory section 15 (the time certification receiving section 18 as required) of the positioning terminal 10c are configured to be protected against tampering in an integrated manner. The system configuration is the same as the other system configurations.
The operation is the same as those of the other systems, and therefore will not be described here in detail.
This configuration is effective in preventing spoofing of a position by a false signal input using equipment, like a GPS simulator, that generates an output as powerful as that of a GPS antenna, for example. Thus, more reliable position guarantee may be achieved.

### Embodiment 3.

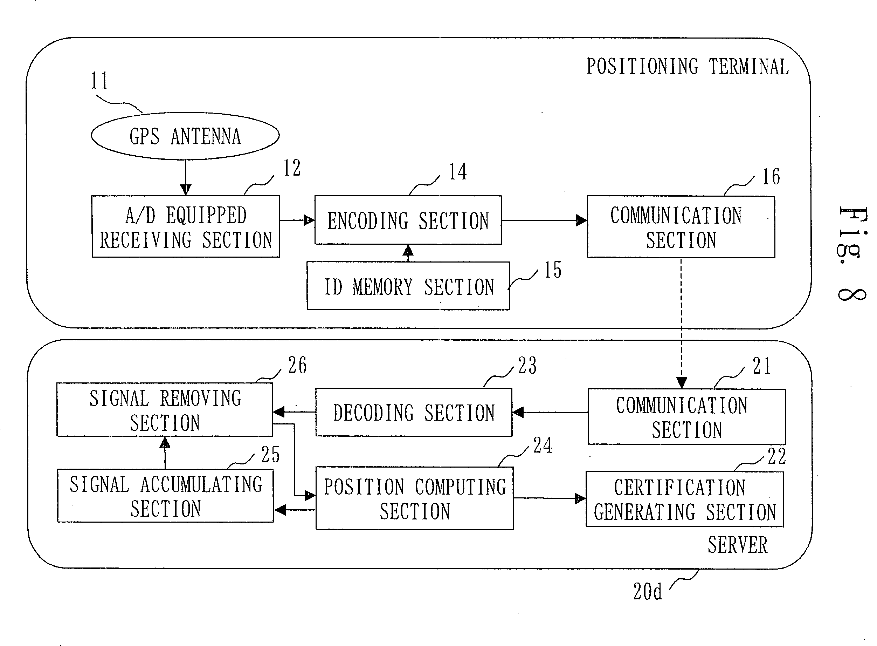

A description is now given of a position guarantee system that improves the accuracy of the position information of the terminal itself.
The system configuration of this embodiment is the same as that of Fig. 2. Fig. 8 shows a hardware configuration. This configuration includes, on a server 20d side, a signal accumulating section 25 that records decoded transmission data and computed position and time in correlation with one another, and a signal removing section 26 that removes an unwanted signal included in the decoded data by using information recorded in the signal accumulating section 25.

An operation of this configuration is almost the same as that of the first embodiment except for an additional operation described below.
The signal removing section 26 outputs the transmission data decoded by the decoding section 23 of the server, and the ID of the positioning terminal 10 extracted at the same time to the signal removing section 26 in a signal removing step S32b. The signal removing section 26 of the server then removes an unwanted signal included in the transmission data received, and outputs it to the position computing section 24 together with the ID of the terminal. Possible cases of signal intrusion are: an unavoidable input of signals caused by a factor such as multipath, and a deliberate input of signals by a signal generator or the like for fraudulent purposes. With the former case of multipath, a signal can be removed by a conventionally known method. With the latter case, a signal can be removed by using a signal recorded in the signal accumulating section 25. For example, a position and time are roughly computed based on the transmission data, and a signal near to the computed position and time is retrieved from the signal accumulating section 25. The signal is then compared to judge the authenticity of the signal. If the authenticity is denied, then the signal is removed.
The position computing section 24 of the server computes a position and time based on the transmission data received, and outputs them to the certificate generating section 22 together with the ID of the terminal. The position computing section 24 also outputs the transmission data received, computed position and time, and the ID unique to the terminal to the signal accumulating section 25. The signal accumulating section 25 records the values of those received in correlation with one another.

This configuration allows the removal of unwanted signals in the transmission data, and is thereby effective in achieving more reliable position guarantee.

Fig. 9 shows another system configuration of this embodiment. Specifically, a server 20e is allowed to receive correction information 61b provided by a correction information center 61. The correction information 61b may also be provided via a broadcasting means other than a communication means.
Fig. 10 shows a hardware configuration thereof that includes a correction information receiving section 27 that receives the correction information 61b.

An operation of the thus configured system is almost the same as that of the first embodiment except for an additional operation described below.
The server 20e, upon receipt of the position guarantee request from a terminal, computes the position and the time based on a GPS signal transmitted from a corresponding positioning terminal. Specifically, the server 20e receives the correction information 61b acquired from the correction information center 61 at the correction information receiving section 27, and corrects the position by also using the position information. To the correction, any conventionally known method may be applied.

This configuration thus providing more accurate position information by using the correction information is effective in achieving highly accurate position guarantee.

Another system of this embodiment is now explained.
The system configuration and the hardware configuration thereof are the same as those of the first embodiment except for a server 20f. The server 20f employs a certificate generating section 22B, which generates a certificate for received time, a computed position, and the accuracy thereof, in replacement of the certificate generating section 22 of the first embodiment.

The operation of this configuration is almost the same as that of the first embodiment except for the following aspects. Specifically, the position computing section 24 of the server computes a position and the accuracy thereof, and time based on received transmission data. In this computation, Geometrical Dilution Of Precision (GDOP) is used as an index for the ideality of satellite distribution. The smaller the GDOP is, the more ideal the satellite distribution is, and the less the positioning accuracy is affected. Such quality information is used to compute a guaranteeable degree of accuracy. If a correction has been made, then the degree of accuracy is computed according to the used correction method. If the position of a terminal on a communication network has been used, then the degree of accuracy is computed according to the used system.
The certificate generating section 22B of the server generates a certificate for a received position and the accuracy thereof, time, and the ID of the terminal. This certificate is tamper-proof. To the generating method thereof, any conventionally known method may be applied.

This configuration is effective in guaranteeing not only a position but also the accuracy (errors included) thereof.
In the case of applying this configuration in a charging system, charges may be set according to a degree of accuracy that is required by a user.

### Embodiment 4.

Another system that can further secure position information against tampering is now explained.

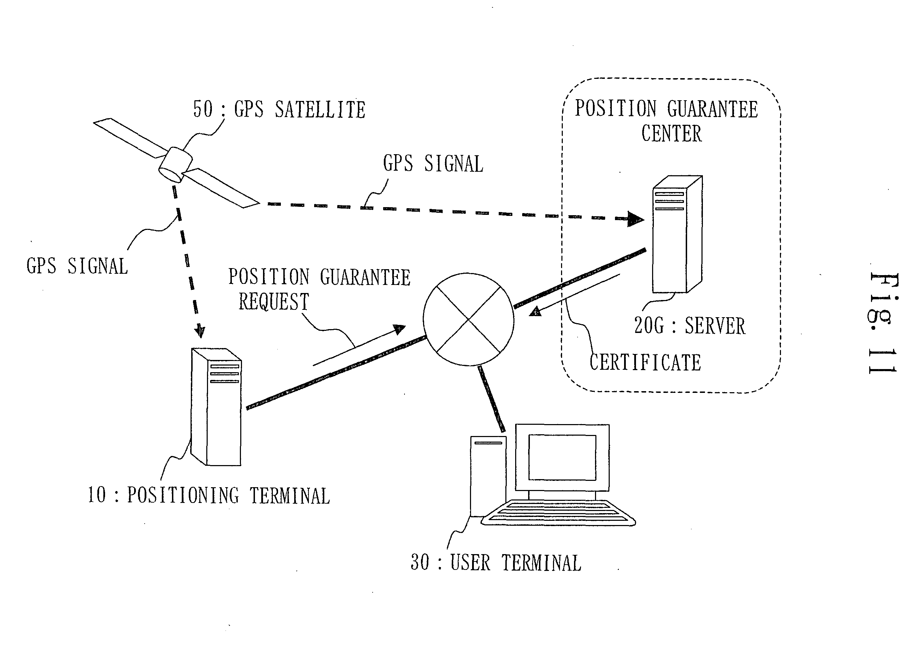

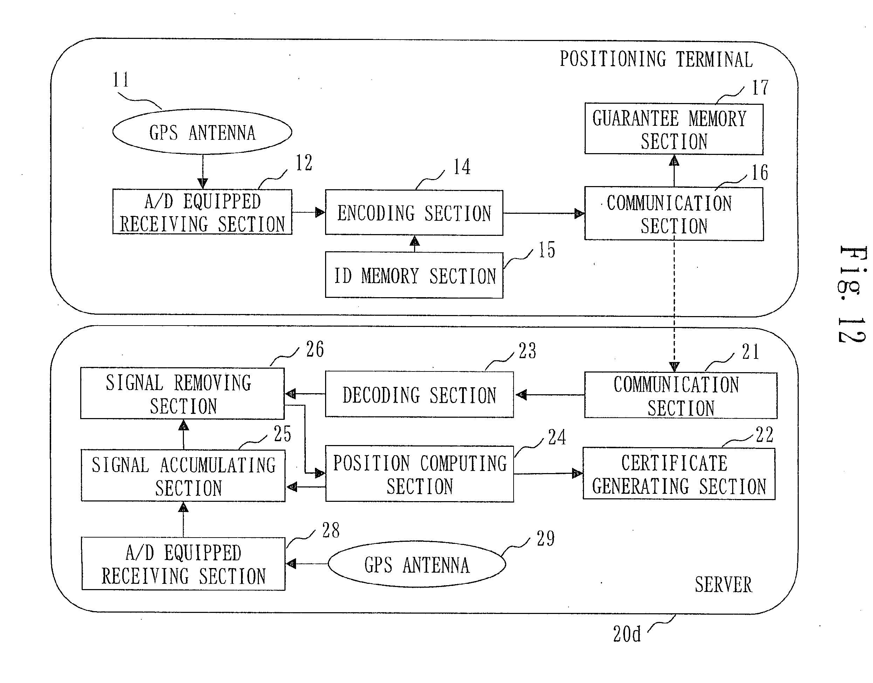

Fig. 11 shows a system configuration of this embodiment. Fig. 12 shows hardware configurations of the positioning terminal 10 and a server 20g. What is different about this configuration from the configuration of Fig. 1 is that the server 20g includes a GPS antenna 29 and an A/D equipped receiving section 28 that performs an analog/digital conversion of a signal received from the antenna 29, so that a GPS signal is received directly from the GPS satellite 50. This GPS antenna 29 is installed in a static manner, and whose position is known in advance.
There is no need for the GPS antenna 29 and the A/D equipped receiving section 28 to locate where the server 20g is. Alternatively, it is also possible to have two or more GPS antennas 29 and A/D equipped receiving sections 28. Still alternatively, an element equivalent to the GPS antenna 29 may be one that receives signals from reference points, such as electronic reference points, distributed all over the country.

An operation of this configuration is almost the same as that of the third embodiment except for an additional operation described below.
The server 20g receives a GPS signal from the GPS satellite 50 or the electronic reference point, converts the GPS signal to a digital signal, and then stores the digital signal in the signal accumulation section 25. When GPS signals are received from two or more GPS satellites, the GPS signals, the satellite identification codes, the positioning codes and carrier waves of the GPS signals are accumulated in groups and stored in correlation with the time of reception.
The signal removing section 26 removes unwanted illegal signals in S32b of Fig. 4 by using signals accumulated in the signal accumulating section 25. Then, in the process of S34c of Fig. 4, for example, approximate time is computed based on the transmission data. Then, a signal received at the particular time is retrieved from the signal accumulating section 25, and compared to determine the authenticity of the signal from the positioning terminal. If the judgement denies the authenticity of the signal from the positioning terminal, then the signal is removed.

With two or more GPS antennas 29 involved, the server 20g computes an approximate position based on the transmission data. Then, the server 20g uses transmission data corresponding to a signal that is received at the nearest GPS antenna to the position. It is difficult for illegal signals to make simultaneous intrusions into signals thus received at two or more locations.
It is easy to detect an illegal signal that is included in a signal received at a GPS antenna whose position is already known because a computation result of the position of the illegal signal is different from a position already known.
It is also possible that the server is configured without the signal removing section. In this case, the server performs approximate position computation by using corresponding two or more GPS signals stored in the signal accumulating section 25. Thus, position computation may be performed by using the transmission data from the positioning terminal 10 from which this position information can be obtained.
The above described configuration, allowing the removal of fraudulent signals in transmission data, is effective in achieving more reliable position guarantee.

### Brief Description of the Drawings

[Fig. 1] It is a diagram illustrating a hardware configuration of a system according to a first embodiment of the present invention.
[Fig. 2] It is a diagram illustrating a system configuration of the first embodiment.
[Fig. 3] It is a diagram illustrating a detailed configuration of elements shown in Fig. 1.
[Fig. 4] It is a flowchart illustrating an operation of the system according to the first embodiment, etc.
[Fig. 5] It is a diagram illustrating a system configuration of a second embodiment of the present invention.
[Fig. 6] It is a diagram illustrating a hardware configuration of a system according to the second embodiment.
[Fig. 7] It is a diagram illustrating a hardware configuration of another system according to the second embodiment.
[Fig. 8] It is a diagram illustrating a hardware configuration of a system according to a third embodiment of the present invention.

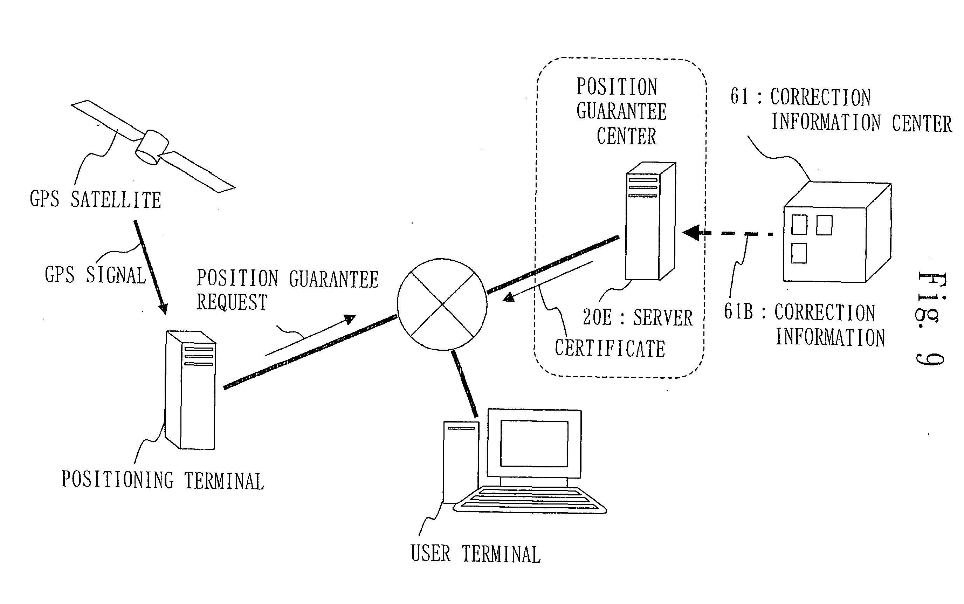

[Fig. 9] It is a diagram illustrating a configuration of another system according to the third embodiment.

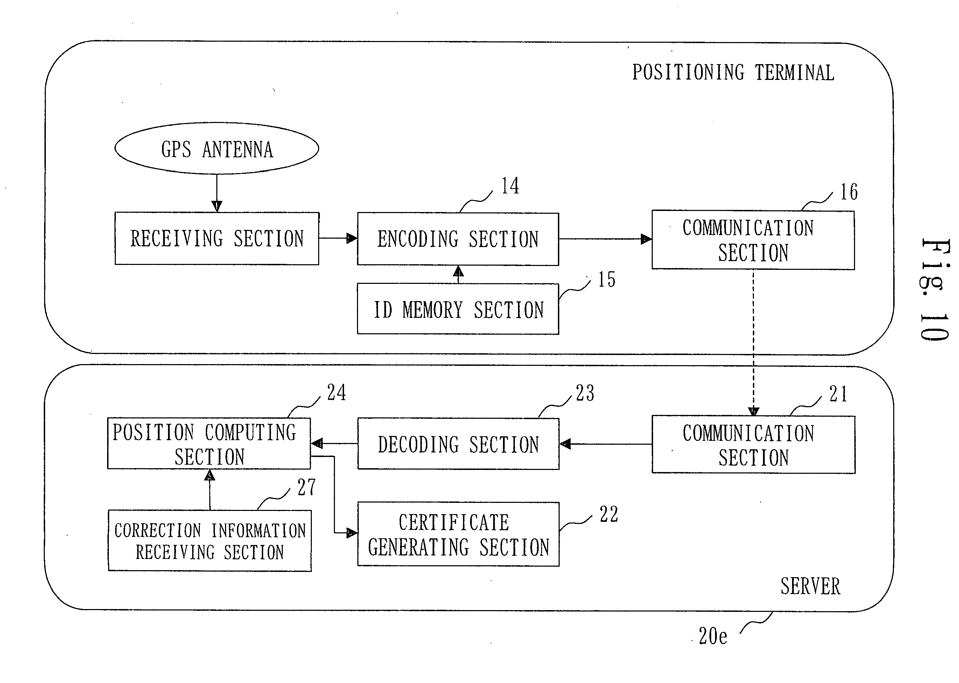

[Fig. 10] It is a diagram illustrating a hardware configuration of another system according to the third embodiment.
[Fig. 11] It is a diagram illustrating a configuration of another system according to a fourth embodiment.
[Fig. 12] It is a diagram illustrating a hardware configuration of another system according to the fourth embodiment.
[Fig. 13] It is a diagram illustrating a conventional configuration of a commonly used positioning terminal.

### Explanation of Reference Numerals

10, 10b, 10c positioning terminal, 11 GPS antenna, 12 A/D equipped receiving section, 14 encoding section, 15 ID memory section, 16 communication section, 17 guarantee memory section, 18 time certification receiving section, 20, 20d, 20e server, 20g server, 21 communication section, 22 certificate generating section, 23 decoding section, 24 position computing section, 25 signal accumulating section, 26 signal removing section, 27 correction information receiving section, 28 A/D equipped receiving section, 29 GPS antenna, 30 user terminal, 31 anti-tampering section, 40 base station, 50, 50a, 50b GPS (positioning) satellite, 51 quasi-zenith satellite, 61 correction information center, 61b correction information, 71 processor, 72 memory, 73 ID memory program, 74 bus, 111 positioning code, 112 carrier wave, S31 position guarantee request reception confirming step, S32 positioning code/carrier wave decoding step, S33 position computing step, S34 position guarantee certificate generating step, S41 positioning code/carrier wave transmitting and position guarantee request transmitting step, and S42 position guarantee certificate reception confirming step.

## Claims

1. A position guarantee server, comprising:
a communication section that receives from a positioning terminal transmission data including encoded data of a positioning code and a carrier wave from a positioning satellite by using an identification code of the positioning terminal itself;
a decoding section that stores the identification code of the positioning terminal and decodes the transmission data by using the identification code;
a position computing section that computes a position of the positioning terminal based on the positioning code decoded and the carrier wave decoded by the decoding section; and
a certificate generating section that certifies position information that is obtained by the position computing section,
wherein the certificate generating section, upon receipt of a position guarantee request made from the positioning terminal, certifies the position information by the position computing section.

2. The position guarantee server of claim 1, wherein the certificate generating section certifies the position information together with one of information about a device indicating position and information indicating time.

3. The position guarantee server of claim 1, wherein the certificate generating section certifies the position information together with one of computation based on correction information about position information from the positioning satellite and distribution information of the positioning satellite.

4. The position guarantee server of claim 1, further comprising:
a receiving section that receives a position signal indicating a position of the positioning satellite; and
a signal accumulating section that stores the position signal received by the receiving section,
wherein the position computing section judges the transmission data of the positioning terminal by using the position signal stored, and computes a position of the positioning terminal on determining authenticity of the transmission data from the positioning terminal.

5. A position guarantee system, comprising:
a positioning terminal that encodes a positioning code and a carrier wave from a positioning satellite by using an identification code of the positioning terminal itself, and transmits them as transmission data; and
a server,
the server, including:
a decoding section that stores the identification code of the positioning terminal, receives and decodes the transmission data;
a position computing section that computes a position of the positioning terminal based on the positioning code decoded and the carrier wave decoded; and
a certificate generating section that certifies position information that is obtained by the position computation,
wherein the server, upon receipt of a position guarantee request from the terminal, certifies the position information by using the position computation.

6. The position guarantee system of claim 4, wherein the positioning terminal secures against tampering a portion that receives the positioning code and the carrier wave from the positioning satellite and a portion that encodes the signal received by using an identification code of the positioning terminal itself.

7. The position guarantee system of claim 5, wherein the server further includes:
a receiving section that receives a position signal indicating a position of the positioning satellite; and
a signal accumulating section that stores the position signal received by the receiving section,
wherein the position computing section judges the transmission data from the positioning terminal by using the position signal stored, and computes a position of the positioning terminal on determining authenticity of the transmission data from the positioning terminal.

8. A position guarantee method, comprising the steps of:
a positioning terminal:
encoding a positioning code and a carrier wave from a positioning satellite by using an identification code of the positioning terminal itself, and transmitting them as transmission data;
a server:
receiving the transmission data and decoding the transmission data by using the identification code of the positioning terminal stored;
computing a position of the positioning terminal based on the positioning code decoded and the carrier wave decoded as a position computing step; and
certifying position information obtained by the position computing step in response to a position guarantee request as a certificate generating step.

9. The position guarantee method of claim 8, wherein the position computing step includes computing the position together with position information from a device, and adding to the position information of the positioning terminal at least one of the position information and time information computed.

10. The position guarantee method of claim 8, further comprising the step of:
removing an unwanted signal from the transmission data received as a signal removing step,
wherein the position computing step includes computing the position of the positioning terminal by using the transmission data decoded that has been processed through the signal removing step.

11. The position guarantee method of claim 8, wherein the position computing step includes acquiring at least one of correction information for the position information from the positioning satellite, the position information of the positioning satellite, and position information of an electronic reference point; judging authenticity of the transmission data from the positioning terminal based on acquired information; and computing the position of the positioning terminal on determining the authenticity of the transmission data from the positioning terminal.

12. The position guarantee method of claim 8, further comprising the steps of:
the server:
receiving a position signal indicating a position of the positioning satellite as a receiving step, and
storing the position signal received by the receiving step by the server as a signal accumulating step,
wherein the position computing step includes judging authenticity of the transmission data from the positioning terminal by using the position signal stored by the signal accumulating step, and computing the position of the positioning terminal on determining the authenticity of the transmission data from the positioning terminal.
